# EUROPÄISCHE PATENTSCHRIFT

(11) **EP 0 480 169 B1**
(45) Veröffentlichungstag und Bekanntmachung des Hinweises auf die Patenterteilung: **01.06.1994**
(21) Anmeldenummer: 91114787.4
(22) Anmeldetag: 03.09.1991
(51) Int. Cl.: B30B 15/10, F16D 67/04

(54) **Kombinierte Kupplungs- und Bremsvorrichtung, insbesondere für Pressen**
Combined clutch and brake device, especially for presses
Dispositif d'embrayage et de freinage combiné, particulièrement pour presses

(30) Priorität: 11.10.1990 DE 9014112 U
(43) Veröffentlichungstag der Anmeldung: 15.04.1992
(73) Patentinhaber: Ortlinghaus-Werke GmbH, 42929 Wermelskirchen (DE)
(72) Erfinder: Mombré, Karl Wilhelm, Dipl.-Ing., W-5632 Wermelskirchen 1 (DE); Weisser, Hans Michael, W-5630 Remscheid 1 (DE)
(74) Vertreter: Mentzel, Norbert, Dipl.-Phys.

(56) Entgegenhaltungen:
- DE-A- 2 202 398
- DE-A- 3 424 539
- DE-A- 3 424 540
- DE-C- 2 531 191
- DE-U- 9 014 112

## Beschreibung

Die Erfindung richtet sich auf eine Vorrichtung der im Oberbegriff des Anspruches 1 angegebenen Art. Das Typische dieser Vorrichtung besteht darin, daß die Kupplung und die Bremse miteinander so gekoppelt sind, daß heim Öffnen der Bremse die Kupplung geschlossen und beim Öffnen der Kupplung die Bremse geschlossen ist. Dazu dient der durch Druckmittel einerseits und Rückstellfedern andererseits zwischen zwei Schaltstellungen umsteuerbare Schaltkolben, der in diesem Sinne auf die Kupplungs- bzw. Bremslamellen-Pakete einwirkt. Bei der Vorrichtung ist ein Schleichgangantrieb vorgesehen, der z. B. beim Einrichten einer Presse erforderlich ist. Dieser wirkt über das Bremslamellen-Paket und besteht z. B. aus einen, am Bremsgehäuse angreifenden Schneckentrieb.

Ein Nachteil der bekannten Vorrichtung ist darin zu sehen, daß im Schleichgangbetrieb nicht das volle, zur Erzeugung der Nennpreßkraft erforderliche Drehmoment über die Bremse auf die Welle übertragen werden kann. Im Vergleich zum Antriebsmoment fallen relativ kleine Bremsmomente an. Die Rückstellfedern sind in der Bremsstellung des Schaltkolbens wirksam und in manchen Anwendungsfällen ist auch die Bremse kleiner als die Kupplung dimensioniert. Um auch im Schleichgangbetrieb die volle Nennpreßkraft zu erreichen, müßte die Bremse wesentlich aufwendiger gestaltet sein, als es für den Normalbetrieb erforderlich wäre, was aus räumlichen Gründen nur schwer zu verwirklichen ist.

Der Erfindung liegt die Aufgabe zugrunde, bei einer Vorrichtung der im Oberbegriff genannten Art eine konstruktiv einfache, funktionssichere und vor allem wirkungsvollere Ankopplung des Schleichgangantriebs an die Welle zu erreichen. Dies wird erfindungsgemäß durch die im Kennzeichen des Anspruches 1 angeführten Maßnahmen erreicht. Die erfindungsgemäße Vorrichtung zeichnet sich durch folgende Besonderheiten aus.

Wird der Hilfskolben druckmittelbeaufschlagt, so unterstützt er die Wirkung der Rückstellfedern und übt, ergänzend zur Federkraft, einen erhöhten Andruck des Schaltkolbens auf das Lamellenpaket aus. Damit fällt in dieser Schaltstellung ein wesentlich höheres Drehmoment an. Sind beispielsweise die Rückstellfedern, gemäß Anspruch 2, in Bremsstellung des Schaltkolbens wirksam, so kann beim Schleichgangantrieb das Bremsmoment durch die Stoßausübung des Hilfskolbens auf den Schaltkolben erhöht werden, wenn man nach Anspruch 4 verfährt. Dies läßt sich soweit steigern, daß das Antriebsmoment des Schaltkolbens im wesentlichen gleich dem Bremsmoment wird, wie es Anspruch 5 vorschlägt. Im Bereich der Bremse brauchen dabei keine weiteren Maßnahmen vorgenommen zu werden; der Hilfskolben kann außerhalb der Kupplung positioniert sein, wofür man die in den Ansprüchen 7 bis 12 näher beschriebenen Maßnahmen verwenden kann.

Alternativ könnte der Schaltkolben eine Baueinheit mit dem Hilfskolben gemäß Anspruch 6 bilden. Die Druckmittelbeaufschlagung des Hilfskolbens wird im Wechsel mit derjenigen des Schaltkolbens erfolgen, wie aus Anspruch 2 hervorgeht. Für beide Kolben wird man zweckmäßigerweise, gemäß Anspruch 13, das gleiche Druckmittel und die gleiche Druckmittelsteuerung verwenden. Die Anordnung der beiden Kolben wird zueinander gegensinnig in der Vorrichtung vorgenommen, wie aus Anspruch 15 zu entnehmen ist.

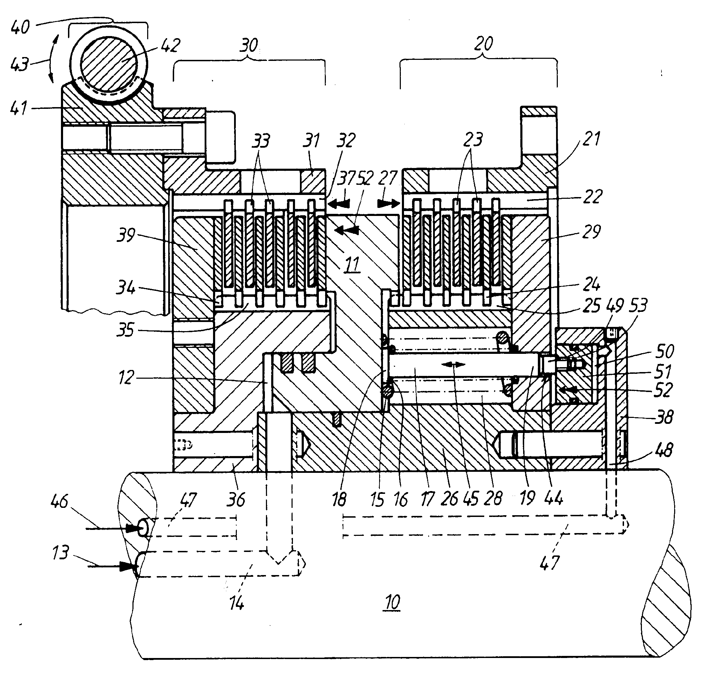

Weitere Maßnahmen und Vorteile der Erfindung ergeben sich aus den Ansprüchen, der Beschreibung und der Zeichnung. Dabei richtet sich die Erfindung auf alle daraus entnehmbaren neuen Merkmale und Merkmalskombinationen, auch wenn diese nicht ausdrücklich in den Ansprüchen angeführt sein sollten. In der Zeichnung ist die Erfindung in einem Ausführungsbeispiel dargestellt und zeigt
einen Axialschnitt durch die obere Hälfte der erfindungsgemäßen kombinierten Kupplungs- und Bremsvorrichtung.

In einem nicht näher dargestellten Gestell einer Maschine, z. B. einer Presse od. dgl. ist eine Welle 10 gelagert und trägt ebenfalls nicht näher gezeigte Abtriebsmittel, z. B. Zahnräder. Um die Welle 10 ist die erfindungsgemäße Vorrichtung ringförmig angeordnet. Sie läßt sich in zwei Abschnitte gliedern, nämlich eine Kupplung 20 einerseits und eine Bremse 30 andererseits, zwischen denen ein Schaltkolben 11 angeordnet ist.

Die Kupplung 20 umfaßt ein als Antrieb der Vorrichtung wirksames Schwungrad, von welchem lediglich ein Anschlußteil 21 mit einem Lamellenträger 22 erkennbar ist, an welchem hier eine Vielzahl von äußeren Kupplungslamellen 23 sitzen. Den äußeren Kupplungslamellen sind innere Kupplungslamellen 24 zugeordnet, die über Lamellenträger 25 an einem Nabenteil 26 sitzen. Der Nabenteil 26 ist drehfest mit der Welle 10 verbunden und setzt sich in einem analogen Nabenteil 36 im Bereich der Bremse 30 fort, wo ein entsprechender Lamellenaufbau vorliegt. Die wechselseitig ineinandergreifenden inneren und äußeren Lamellen 23, 24 sollen zusammenfassend als "Kupplungslamellen-Paket 23, 24" bezeichnet werden.

Die Bremse 30 umfaßt ein Bremsgehäuse 31, an welchem, über einen Lamellenträger 32 äußere Bremslamellen 33 sitzen, denen über einen Lamellenträger 35 am erwähnten Nabenteil 36 befindliche innere Bremslamellen 34 zugeordnet sind. Auch hier sollen die äußeren und inneren Bremslamellen 33, 34 nachfolgend kurz mit "Bremslamellen-Paket 33, 34" benannt werden. Am Bremsgehäuse 31 greift ein Schleichgangantrieb 40 an, der hier aus einem selbsthemmenden Schneckengetriebe 41, 42 besteht, umfassend ein drehfest mit dem Bremsgehäuse 31 verbundenes Schneckenrad 41 und eine im Gestell der Maschine drehgelagerte Schnecke 42. Normalerweise dient das Schneckengetriebe 41, 42 als Drehmomentstütze zur Aufnahme eines Bremsmoments bei wirksamer Bremse 30. Die Schnecke 42 ist aber bedarfsweise auch über einen nicht dargestellten Antriebsmotor im Sinne des eingezeichneten Drehpfeils 43 verdrehbar, was für den noch näher zu beschreibenden Schleichgang genutzt wird.

Die beiden Nabenteile 26, 36 schließen miteinander einen Zylinder 12 für den bereits erwähnten Schaltkolben 11 ein. Ein Druckmittel 13, vorzugsweise Drucköl, wird durch axiale und radiale Kanäle 14 in den Zylinder 12 geleitet und bewegt den Schaltkolben 11 gegen die Wirkung von Rückstellfedern 15, 16, axial, im Sinne des Bewegungspfeils 27 gegen die Kupplung 20. Dadurch wird das Lamellen-Paket 23, 24 zusammengepreßt und es kommt zu einer Übertragung eines Antriebsmoments vom am Anschlußteil 21 befestigten Schwungrads auf die Welle 10. Der Schaltkolben 11 ist ein umlaufender Ringkolben, wie auch der Zylinder 12 ringförmig ausgebildet ist.

Demgegenüber sind die Rückstellfedern 15, 16 stellenweise angeordnet, die allerdings auch ringförmig um die Welle 10 verteilt sind. Dazu ist der im Bereich der Kupplung 20 vorgesehene Kupplungsteil 26 mit einer axialen Aussparung 28 versehen, in welcher die beiden als Federpaket ineinander steckenden wendelförmigen Rückstellfedern 15, 16 angeordnet sind. Diese Axialaussparung 28 ist auch von einem besonderen Stößel 17 durchsetzt, der mit seinem einen, flanschförmig verbreiterten Stirnende 18 unter der Wirkung der inneren Rückstellfeder 16 stets in kraftschlüssiger Anlage an den Schaltkolben 11 gehalten wird. Dadurch erhält man als erfindungswesentlichen Vorteile eine geräuscharme Arbeitsweise. Der Stößel 17 greift mit seinem gegenüberliegenden Stößelendstück 19 in eine axiale Bohrung 44 einer mit dem Nabenteil 26 fest verbundenen Endscheibe 29 ein, worin er längsverschieblich geführt ist. Der Stößel 17 wirkt zugleich als Führungsbolzen für die Federanordnung 15, 16. Beide wendelförmigen Rückstellfedern 15, 16 stützen sich an der Innenfläche der Endscheibe 29 ab, wobei die äußere Wendelfeder 15 gegenüberliegend unmittelbar am Schaltkolben 11 zur Anlage kommt. Der Stößel 17 ist bei der Axialbewegung des Schaltkolbens 11 im Sinne des eingezeichneten Doppelpfeils 45 längsverschieblich.

Wird die Zufuhr des Druckmittels 13 unterbunden, so wird der Schaltkolben 11 unter der Wirkung der Rückstellfedern 15, 16 in Gegenrichtung, im Sinne des Pfeils 37 zurückgestellt und drückt das Bremslamellen-Paket 33, 34 zusammen. Am gegenüberliegenden Ende des Lamellen-Pakets 33, 34 befindet sich eine mit dem dortigen Nabenteil 36 fest verbundene Endscheibe 39 als Widerlager. Jetzt kann ein Bremsmoment von der Welle 10 über das Bremsgehäuse 31 auf das Gestell ausgeübt werden. Diese Grundverhältnisse liegen zwar auch vor, wenn der Schleichgangantrieb 40 wirksam gesetzt wird, doch besitzt die erfindungsgemäße Vorrichtung einen zusätzlichen druckmittelbeaufschlagten Hilfskolben 51.

Drehfest mit dem kupplungsseitigen Nabenteil 36 ist ein Anschlußstück 38 auf der Welle 10 montiert, das einen Zylinder 50 zur Aufnahme des Kolbens 51 besitzt. Ein Druckmittel 46 wird ebenfalls durch axiale und radiale Kanäle 47 in der Welle 10 bis zum Anschlußstück 38 geführt und dort über Ergänzungskanäle 48 weitergeleitet, um den Kolben 51 im Sinne des Druckpfeils 52 zu beaufschlagen. Der Hilfskolben 51 ist seinerseits mit einem herausragenden Führungszapfen 49 versehen. Dieser ist mit einer im Hilfskolben 51 befindlichen Gewindeaufnahme 53 in Eingriff und damit in seiner herausragenden Länge einstellbar. Der Führungszapfen 49 ragt in die vorerwähnte Axialbohrung 44 der Endplatte 29 ein und steht im Stumpfstoß mit der Stirnfläche des dort befindlichen Stößelendstücks 19. Wird der Zylinder 50 mit Druckmittel beaufschlagt, so wirkt der vorerwähnte Kolbendruck 52 über den Führungszapfen 49 auf den Stößel 17, der nun diese Kraft, ergänzend zu der vorbeschriebenen Rückstellkraft 37 der Feder auf den Schaltkolben 11 überträgt.

Daraus folgt eine doppelte Druckausübung 37, 52 auf das Bremslamellen-Paket 33, 34. Dadurch wird das Bremsmoment wesentlich erhöht und kann Werte annehmen, die dem auf die Kupplung 20 einwirkenden Antriebsmoment mindestens gleich sind. Für die Steuerung des Schaltkolbens 11 wird man zweckmäßigerweise das gleiche Druckmittel 13 wie beim Druckmittel 46 des Hilfskolbens 51 ausüben. Beide werden vom gleichen Druckmittelspeicher über Sicherheitsventile und einen Zuführkopf auf die Axialkanäle 14; 47 der Welle 10 übertragen. Ein dazwischen geschaltetes Steuerventil bestimmt, ob und welcher der beiden Kolben 11, 51 druckmittelbeaufschlagt wird bzw. druckfrei ist. Durch das hohe Bremsmoment läßt sich beim Antrieb 43 der Schnecke 42 ein wirkungsvoller Schleichgang über das Bremslamellen-Paket 33, 34 auf die Welle 10 übertragen. In diesem Fall wirkt das Bremslamellen-Paket als sehr effektives Übertragungselement für den Schleichgangantrieb 40. Damit ist die Vorrichtung sehr feinfühlig verstellbar.

Alternativ könnte der Stößel 17 fest mit dem Hilfskolben 51 verbunden sein. Der Hilfskolben 51 könnte auch an einem anderen Ort der Vorrichtung angeordnet sein, solange im Falle des Schleichgangantriebs 40 dafür gesorgt ist, daß seine Kolbenkraft 52 stoßwirksam auf den Schaltkolben 11 einwirkt. So käme auch eine baueinheitliche Vereinigung der beiden Kolben infrage. Im Falle einer Hydraulik als Druckmittel verwendet man zahlreiche Lamellen 33, 34; 23, 24, die vielfach paarweise zusammenwirken. Sofern ein pneumatischer Betrieb infrage kommt, genügen Einzellamellen 33, 34 bzw. 24, 23.

## Patentansprüche

1. Kombinierte Kupplungs- und Bremsvorrichtung mit einem zusätzlichen Schleichgangantrieb (40), insbesondere für Pressen,
die in drehfester Verbindung mit einer Welle (10) wenigstens eine innere Kupplungslamelle (24) einerseits sowie eine innere Bremslamelle (34) andererseits aufweist, denen mindestens eine äußere Kupplungs- bzw. Bremslamelle (23, 33) zugeordnet sind und diese Lamellen paarweise jeweils zu einem Kupplungs- bzw. Bremslamellen-Paket (23, 24; 33, 34) vervollständigt,
wobei die äußere Kupplungslamelle (23) mit einem drehangetriebenen Schwungrad (21), aber die äußere Bremslamelle (33) mit einem Bremsgehäuse (31) verbunden sind und das Bremsgehäuse (31) sich über den Schleichgangantrieb (40) am feststehenden Gestell der Vorrichtung abstützt,
und mit einem zwar drehfest aber axial verschiebbar (27, 37) auf der Welle (10) gelagerten Schaltkolben (11), der zwischen den Kupplungs- und Bremslamellen-Paketen einerseits durch Druckmittelbetätigung (13) und andererseits durch Rückstellfedern (15, 16) in zwei anpreßwirksame Stellungen überführbar ist,
der Schaltkolben (11) in seiner einen Schaltstellung (Kupplungsstellung) das Antriebsmoment vom Schwungrad (21) auf die Welle (10) überträgt und die Bremse (30) löst,
aber in der anderen Schaltstellung (Bremsstellung) das Bremsmoment von der Welle (10) auf das Gestell bzw. den Schleichgang (40) auf die Welle (10) überträgt und die Kupplung (20) löst,
**dadurch gekennzeichnet,**
daß ein Hilfskolben (51) über eine Stoßverbindung (17) am Schaltkolben (11) angreift
und der Hilfskolben (51), unabhängig von der Druckmittelbeaufschlagung (13) des Schaltkolbens (11), in Wirkrichtung (37) der Rückstellfedern (15, 16) druckmittelbeaufschlagt (52) ist.

2. Vorrichtung nach Anspruch 1, dadurch gekennzeichnet, daß der Hilfskolben (51) im Wechsel mit der Druckmittelbetätigung (13) des Schaltkolbens (11) druckmittelbeaufschlagt (52) ist.

3. Vorrichtung nach Anspruch 1 oder 2 mit in Bremsstellung des Schaltkolbens (11) wirksamen Rückstellfedern (15, 16), dadurch gekennzeichnet, daß der Hilfskolben (51) den auf das Bremslamellen-Paket (33, 34) ausgeübten Druck (37) des Schaltkolbens (11) erhöht (52).

4. Vorrichtung nach Anspruch 3, dadurch gekennzeichnet, daß der Hilfskolben (51) nur bei wirksamem Schleichgangantrieb (40) druckmittelbeaufschlagt (52) ist.

5. Vorrichtung nach Anspruch 3 oder 4, dadurch gekennzeichnet, daß das vom Schaltkolben (11) ausgeübte Antriebsmoment im wesentlichen gleich ist der Summe des einerseits von den Rückstellfedern (15, 16) und andererseits vom druckmittelbeaufschlagten Hilfskolben (51) ausgeübten Bremsmoments.

6. Vorrichtung nach einem oder mehreren der Ansprüche 1 bis 5, dadurch gekennzeichnet, daß der Schaltkolben (11) mit dem Hilfskolben (51) eine Baueinheit bildet.

7. Vorrichtung nach einem oder mehreren der Ansprüche 1 bis 5, dadurch gekennzeichnet, daß der Hilfskolben (51) in axialem Abstand zum Schaltkolben (11) angeordnet ist und zwischen ihnen (11, 51) sich ein Stößel (17) befindet.

8. Vorrichtung nach Anspruch 7, dadurch gekennzeichnet, daß der Stößel (17) zugleich ein Führungsbolzen für die Rückstellfeder (15, 16) ist.

9. Vorrichtung nach Anspruch 7 oder 8, dadurch gekennzeichnet, daß das eine Stößelende (18), vorzugsweise kraftschlüssig (16), am Schaltkolben (11) anliegt und das andere Stößelende (19) mit dem Hilfskolben (51) fest verbunden ist.

10. Vorrichtung nach Anspruch 7 oder 8, dadurch gekennzeichnet, daß das eine Stößelende (18), vorzugsweise kraftschlüssig (16), am Schaltkolben (11) anliegt und das andere Stößelende (19) in einer Bohrung (44) frei verschieblich (45) geführt ist.

11. Vorrichtung nach Anspruch 10, dadurch gekennzeichnet, daß der Hilfskolben (51) einen Führungszapfen (49) trägt, der in die Bohrung (44) des Stößels (17) eingreift und im Stumpfstoß mit dem dort aufgenommenen Stößelende (19) steht.

12. Vorrichtung nach einem oder mehreren der Ansprüche 7 bis 11, dadurch gekennzeichnet, daß die wirksame axiale Länge des Stößels (17) bzw. der aus dem Stößel (17) und dem Führungszapfen (49) bestehenden Stoßverbindung einstellbar ist.

13. Vorrichtung nach einem oder mehreren der Ansprüche 1 bis 12, dadurch gekennzeichnet, daß das gleiche Druckmittel (46, 13) und vorzugsweise auch die gleiche Druckmittelsteuerung sowohl zur Betätigung des Schaltkolbens (11) als auch zur Beaufschlagung des Hilfskolbens (51) dienen.

14. Vorrichtung nach Anspruch 13, dadurch gekennzeichnet, daß die Endstücke der zu den beiden Zylindern (12; 50) des Schalt- und Hilfskolbens (11; 51) führenden Druckmittelkanäle (14; 47) im Inneren der Welle (10) verlaufen.

15. Vorrichtung nach einem oder mehreren der Ansprüche 1 bis 14, dadurch gekennzeichnet, daß die beiden Druckmittelräume des Schalt- und Hilfskolbens (11; 51) in den Zylindern (12; 50) voneinander weggerichtet sind und die beiden Kolben (11; 51) zueinander gegensinnig (27; 52) wirken.

## Claims

1. A combined coupling- and braking device having an additional slow motion drive (40), particularly for presses,
which has at least one inner coupling disc (24), on the one hand, which is non-rotationally connected to a shaft (10), and which also has an inner brake disc (34), on the other hand, with which at least one outer coupling- and brake disc (23, 33) are associated, and the discs each form pairs which make up a set composed of a coupling disc and a brake disc (23, 24; 33, 34),
wherein the outer coupling disc (23) is connected to a rotationally driven wheel (21) for oscillating movement, but the outer brake disc (33) is connected to a brake housing (31), and the brake housing (31) bears by way of the slow motion drive (40) on the stationary framework of the device,
and having an operating piston (11) which is mounted non-rotationally but which is mounted so that it is displaceable axially (27, 37) on the shaft (10), the operating piston being able to be moved between the sets of coupling- and brake discs, on the one hand, by actuation of a pressure medium (13), and, on the other hand, being able to be moved by return springs (15, 16) into two contact-effective positions,
the operating piston (11), in its one operating position (coupling position), transfers the drive moment of the wheel (21) for oscillating movement onto the shaft (10) and releases the brake (30),
but in the other operating position (braking position) it transfers the braking moment from the shaft (10) onto the framework or onto the slow motion drive (40) onto the shaft (10), and releases the coupling (20),
characterised in that,
an auxiliary piston (51) acts on the operating piston (11) by way of a butt joint (17)
and the auxiliary piston (51), independently of the pressure medium load (13) of the operating piston (11), loads pressure medium (52) in the operative direction (37) of the return springs (15, 16).

2. A device according to Claim 1, characterised in that the auxiliary piston (51) is loaded by pressure medium alternatingly with pressure medium actuation (13) of the operating piston (11).

3. A device according to Claim 1 or Claim 2, having return springs (15, 16) which are operative in the brake position of the operating piston (11), characterised in that the auxiliary piston (51) increases (52) the pressure (37) of the operating piston (11) applied to the set of brake discs (33, 34).

4. A device according to Claim 3, characterised in that the auxiliary piston (51) is only loaded by pressure medium (52) when the slow motion drive (40) is operative.

5. A device according to Claim 3 or 4, characterised in that the drive moment applied by the operating piston (11) is substantially equal to the sum of the braking moment applied, on the one hand, by the return springs (15, 16), and, on the other hand, by the auxiliary piston (51) which is loaded by pressure medium.

6. A device according to one or more of Claims 1 to 5, characterised in that the operating piston (11) together with the auxiliary piston (51) forms one structural unit.

7. A device according to one or more of Claims 1 to 5, characterised in that the auxiliary piston (51) is arranged at an axial spacing from the operating piston (11) and a push rod (17) is disposed between them (11, 51).

8. A device according to Claim 7, characterised in that the push rod (17) is also a guide journal for the return springs (15, 16).

9. A device according to Claim 7 or Claim 8, characterised in that the one end (18) of the push rod rests, preferably in force-locking manner (16), on the operating piston (11), and the other end (19) of the push rod is fixedly connected to the auxiliary piston (51).

10. A device according to Claim 7 or Claim 8, characterised in that the one end (18) of the push rod rests, preferably in force-locking manner (16), on the operating piston (11), and the other end (19) of the push rod is guided in a bore (44) in freely displaceable manner (45).

11. A device according to Claim 10, characterised in that the auxiliary piston (51) carries a guide journal (49) which engages in the bore (44) of the push rod (17) and is butt-joint connected to the end (19) of the push rod received there.

12. A device according to one or more of Claims 7 to 11, characterised in that the operative axial length of the push rod (17) or the joint connection consisting of the push rod (17) and the guide journal (49) is adjustable.

13. A device according to one or more of Claims 1 to 12, characterised in that the same pressure medium (46, 13) and preferably also the same pressure medium control means are used to actuate the operating piston (11) and also to act upon the auxiliary piston (51).

14. A device according to Claim 13, characterised in that the end pieces of the pressure medium passages (14; 47) which lead to the two cylinders (12; 50) of the operating- and auxiliary piston (11; 51) extend inside the shaft (10).

15. A device according to one or more of Claims 1 to 14, characterised in that the two pressure medium chambers of the operating- and auxiliary piston (11; 51) are oriented away from each other in the cylinders (12; 50), and the two pistons (11; 51) act in opposite directions (27; 52) to each other.

## Revendications

1. Dispositif combiné d'embrayage et de freinage, à entraînement d'avance lente (40) supplémentaire, notamment pour presses, qui comprend, en liaison solidaire en rotation avec un arbre (10), au moins, d'une part, un disque intérieur d'embrayage (24) et, d'autre part, un disque intérieur de frein (34) auxquels sont associés respectivement au moins un disque extérieur d'embrayage (23) et un disque extérieur de frein (33), ces disques formant chaque fois, par paires, respectivement un empilement de disques d'embrayage (23, 24) et un empilement de disques de freinage (33, 34), tandis que le disque extérieur d'embrayage (23) est relié à un volant (21) entraîné en rotation et que, par contre, le disque extérieur de frein (33) est relié à un boîtier de frein (31), lequel prend appui sur le bâti fixe du dispositif par l'intermédiaire de l'entraînement d'avance lente (40), le dispositif comportant par ailleurs un piston de commutation (11) qui est monté solidaire en rotation de l'arbre (10), mais mobile en translation axiale (27, 37) vis-à-vis de ce dernier et qui est agencé de façon à pouvoir être placé, entre les empilements de disques d'embrayage et de frein, dans deux positions dans lesquelles il a une action de serrage, d'une part au moyen d'un actionnement par agent de pression (13) et d'autre part au moyen de ressorts de rappel (15, 16), d'une façon telle que, dans l'une de ses positions de commutation (position d'embrayage), le piston de commutation (11) transmet le couple d'entraînement du volant (21) à l'arbre (10) et libère le frein (30), mais que, dans son autre position de commutation (position de freinage), il transmet le couple de freinage de l'arbre (10) au bâti, ou l'avance lente (40) à l'arbre (10), et libère l'embrayage (20),
caractérisé en ce qu'un piston auxiliaire (51) est agencé de façon à pouvoir agir sur le piston de commutation (11) par l'intermédiaire d'une liaison de poussée (17) et en ce qu'indépendamment de l'application de l'agent de pression (13) sur le piston de commutation (11), le piston auxiliaire (51) est soumis à l'action d'un agent de pression (52) dans le sens d'action (37) des ressorts de rappel (15, 16).

2. Dispositif suivant la revendication 1, caractérisé en ce que le piston auxiliaire (51) est soumis à l'action d'un agent de pression (52) d'une manière alternée avec l'application d'un agent de pression (13) sur le piston de commutation (11).

3. Dispositif suivant l'une des revendications 1 et 2, comportant des ressorts de rappel (15, 16) exerçant leur action dans la position de freinage du piston de commutation (11), caractérisé en ce que le piston auxiliaire (51) accroît (52) la pression (37) que le piston de commutation (11) exerce sur l'empilement de disques de freinage (33, 34).

4. Dispositif suivant la revendication 3, caractérisé en ce que le piston auxiliaire (51) n'est soumis à l'action d'un agent de pression (52) que lorsque l'entraînement d'avance lente (40) remplit sa fonction.

5. Dispositif suivant l'une des revendications 3 et 4, caractérisé en ce que le couple d'entraînement exercé par le piston de commutation (11) est approximativement égal à la somme des couples de freinage exercés d'une part par les ressorts de rappel (15, 16) et d'autre part par le piston auxiliaire (51) soumis à l'action d'un agent de pression.

6. Dispositif suivant une ou plusieurs des revendications 1 à 5, caractérisé en ce que le piston de commutation (11) forme avec le piston auxiliaire (51) une unité structurelle.

7. Dispositif suivant l'une ou plusieurs des revendications 1 à 5, caractérisé en ce que le piston auxiliaire (51) est disposé à une certaine distance axiale du piston de commutation (11) et en ce qu'un poussoir (17) est disposé entre ces pistons (11, 51).

8. Dispositif suivant la revendication 7, caractérisé en ce que le poussoir (17) constitue en même temps une tige de guidage des ressorts de rappel (15, 16).

9. Dispositif suivant l'une des revendications 7 et 8, caractérisé en ce qu'une extrémité (18) du poussoir prend appui, de préférence sous l'action d'une force (16), sur le piston de commutation (11) et en ce que l'autre extrémité (19) du poussoir est solidaire à demeure du piston auxiliaire (51).

10. Dispositif suivant l'une des revendications 7 et 8, caractérisé en ce qu'une extrémité (18) du poussoir prend appui, de préférence sous l'action d'une force (16), sur le piston de commutation (11) et en ce que l'autre extrémité (19) du poussoir est guidée dans un alésage (44) de façon à pouvoir s'y déplacer librement en translation (45).

11. Dispositif suivant la revendication 10, caractérisé en ce que le piston auxiliaire (51) porte un téton de guidage (49) qui s'engage dans l'alésage (44) du poussoir (17) et qui est placé en position de poussée bout-à-bout vis-à-vis de l'extrémité (19) du poussoir qui est logée dans cet alésage.

12. Dispositif suivant l'une ou plusieurs des revendications 7 à 11, caractérisé en ce que la longueur axiale efficace du poussoir (17), ou de la liaison de poussée qui est formée du poussoir (17) et du téton de guidage (49), est réglable.

13. Dispositif suivant l'une ou plusieurs des revendications 1 à 12, caractérisé en ce que le même agent de pression (46, 13) et, de préférence aussi, la même commande d'agent de pression servent aussi bien pour l'actionnement du piston de commutation (11) que pour l'action exercée sur le piston auxiliaire (51).

14. Dispositif suivant la revendication 13, caractérisé en ce que les sections extrêmes des conduits d'agent de pression (14 47) menant aux deux cylindres (12; 50) du piston de commutation (11) et du piston auxiliaire (51) s'étendent à l'intérieur de l'arbre (10).

15. Dispositif suivant l'une ou plusieurs des revendication 1 à 14, caractérisé en ce que les deux chambres d'agent de pression du piston de commutation (11) et du piston auxiliaire (51) sont situées dans les cylindres (12 ; 50) de façon à être dirigées dans des sens opposés l'une vis-à-vis de l'autre et en ce que les deux pistons (11 ; 51) exercent leur action dans des sens opposés (27 ; 52) l'un vis-à-vis de l'autre.
